# EUROPEAN PATENT SPECIFICATION

(11) **EP 1 047 553 B1**
(45) Date of publication and mention of the grant of the patent: **13.08.2003**
(21) Application number: 99901255.2
(22) Date of filing: 04.01.1999
(51) Int. Cl.: B32B 13/02, B32B 31/20, E04B 1/34

(54) **A SHEET AND A METHOD FOR PRODUCTION THEREOF**
FOLIE UND VERFAHREN ZU IHRER HERSTELLUNG
FEUILLE ET PROCEDE DE PRODUCTION CORRESPONDANT

(30) Priority: 16.01.1998 SE 9800109
(43) Date of publication of application: 02.11.2000
(73) Proprietor: Glasis Holding AB, 863 00 Sundsbruk (SE)
(72) Inventor: ANDERSSON, Bengt, S-860 35 Sör ker (SE)
(74) Representative: Olsson, Jan
(86) International application number: SE9900001
(87) International publication number: WO99036260

(56) References cited:
- EP-A1- 0 058 141
- EP-A1- 0 559 254
- WO-A1-96/20829
- WO-A1-96/33866
- CA-A1- 2 150 600
- US-A- 4 286 013
- US-A- 5 665 295

## Description

### BACKGROUND OF THE INVENTION AND PRIOR ART

This invention relates to a sheet according to the preamble of the following patent claims. The invention also relates to a method for producing such a sheet. The sheet in question can be used for all kinds of surface-forming purposes. The sheet may also be used as a construction element intended to be coated with any suitable type of surface layer, but it may also designed to form high-quality surface structures on its own in a variety of different connections.

Sheets of polymer materials, and particularly different types of foam materials, result in advantages because they are able to unite a low weight and a good stability, insensitivity against moisture, good noise and heat insulation, etc. However, a problem by prior sheets of the type which is here in question is that their resistance against flames and fire is such that an improvement is requested. For example, during a fire inside a building, the high temperature levels resulting thereof might give rise to such a heating of the sheets that the material thereof starts to decompose, resulting in a gas emission.

US-A-4 286 013 discloses sheets useful as flame barriers comprising in a layer a cured diorganopolysiloxane gum, hollow glass microspheres and a filler selected from ceramic fibres, carbon or graphite fibres.

### SUMMARY OF THE INVENTION

The object of the present invention is to provide ways of improving the resistance of the sheets against fire, flames, or high temperatures. When, hereinafter, the term "resistant against high temperatures" or the like is used, it is supposed to include a reasonable resistance also against fire and flames.

According to the invention, this object is obtained through the features related to in the following patent claims.

Through the compound structure defined in claim 1, there is obtained a sheet in which the inorganic silicate compound will provide a good protective effect against high temperatures, something which is supported by the fact that the layer includes a fibrous inorganic material. The layer in the sheet has a hollow and porous structure, resulting in a good fire insulation. Thereby, it is pointed out that, upon presence of a plurality of different layers comprising inorganic silicate compounds, the density/porosity in different layers may be different thanks to a suitable choice of the constituents of the layers included.

As the inorganic silicate compound, a compound is preferred which, upon being heated, emits a constituent which has a cooling effect. The cooling constituent is, in practice, water. This means that the silicate compound in question is constituted by water-glass. This material contains bound water which, upon being heated, is released such that, thereby, there is a contribution to the fire protective function. Both sodium and potassium silicate compounds are comprised within the scope of the invention. Thereby, sodium silicate is preferred.

The layer also comprises at least one filler. In order to accomplish a sheet which unites a relatively low density, and a large rigidity, the filler has a relatively low density; at least less than 1 000, is preferred suitably less than 600, and preferably less than 300 kg per m³. The filler comprises a mixture of inorganic particles and expanded thermoplastic particles.

The filler comprises inorganic particles, resulting in an improvement of the sheet's resistance against high temperatures. According to an especially preferred embodiment, the inorganic particles are present in the form of glass balloons.

The filler also comprises expanded thermoplastic particles. Such particles have the advantage of Uniting a low-density and a further binding function. However, the organic character of the particles results to some extent in a reduced resistance against high temperatures; at least there is a tendency to an increased emission of undesired gases from the sheet. This resulting effect may, however, under certain circumstances, be accepted as a consequence of the favourable constructive properties of the thermoplastic particles.

The filler comprises a mixture of inorganic particles and expanded thermoplastic particles (organic particles). Thereby, it is preferred that the proportion of organic particles is delimited as far as possible with a maintained and good binding function in the sheet.

Advantageously, the fibrous inorganic material is web-like, something that creates favourable conditions for a rational production of layers. Thereby, it is suitably a question of glass fibres, mineral fibres, or ceramic fibres.

The silicate compound with the additives included therein constitutes 25-90, suitably 45-80, preferably approximately 65 weight-% of the weight of the first layer.

The fibrous, inorganic material constitutes 10-60, suitably 15-45, preferably approximately 25 weight-% of the first layer.

The filler constitutes 3-60, suitably 5-40, preferably approximately 10 weight-% of the first layer. The first layer comprises a first stratum which comprises the inorganic silicate compound and a second stratum which comprises a porous material for permitting a departure of gases along and/or through said porous material stratum during the production of the sheet, for example through hot pressing. In absence of the porous material stratum, the development of gas during the production (hot pressing) would imply a risk of disturbing the sheet formation to a more or less high degree, something that could result in an uneven structure of the sheet obtained. The gas (water steam) developed during the production may thus depart through the porous material stratum. According to an alternative embodiment, at least one of the pressing surfaces may, instead, be made porous or perforated in order to permit the gas departure through said pressing surface.

The inventive sheet in claim 1 may be constituted by one single layer comprising at least one inorganic silicate compound, one fibrous inorganic material, the filler and possibly the added porous material stratum. However, there is also a possibility of hot pressing the sheet of a plurality of first layers, or of forming the sheet by laminating a plurality of first layers which, at least partly, have a rigid character obtained through a drying and a subsequent curing of the silicate, and a possible expansion of the thermoplastic particles. Alternatively, one or more layers of the first type may be combined with one or more second layers. According to a preferred embodiment of the invention, this second layer may comprise a fibrous material, a cured resin, and expanded thermoplastic particles.

According to a preferred embodiment of the inventive sheet, the latter is designed such that it comprises at least 30, suitably at least 40, preferably at least 50 weight-% inorganic constituents. Thereby, a good fire resistance is obtained.

During the production of the inventive sheet a fibrous inorganic material with a web-like character is preferably used. This web-like material is impregnated with an impregnating solution containing the silicate compound and the filler in the form of a mixture of expanded thermoplastic particles, and inorganic particles (glass balloons). The expanded thermoplastic particles have the character which hereinafter will be described in connection to the second layer. The properties of the web-like material of the first layer should also be the same as the one which will be described more in detail with reference to the second layer.

The web-like material, thus impregnated, may subsequently be placed in a hot-pressing device. Thereby, the number of layers may be optional and anything from 1 and upwards depending on the desired thickness of the sheet. Subsequently, the pressing is executed. The latter may be performed such that the press is closed actively, but, as an alternative the press function may also be obtained due to a heating of the press which gives rise to an expansion of the thermoplastic particles, which in its turn results in that the layers located between the press surfaces expand and, accordingly, fill the space between the press surfaces, such that a pressing function is obtained. In the latter case, the press surfaces of the press do not need to be mobile in relation to each other.

The technique described above, results in that, during one stage, there is an important departure of solvent, water, etc. from the material during the pressing. If this gas departure implies problems, the layer or layers that is/are subjected to pressing may be provided with a porous material stratum on at least one side thereof. This porous material stratum is supposed to permit a gas departure along and/or through said stratum. During the hot pressing, the thermoplastic particles are caused to expand such that the layers that are subjected to pressing obtain a foam-like character which depends on the proportion of thermoplastic particles and/or glass balloons.

As to the porous material stratum, the below remarks with reference to a "second" layer include that also the latter may contain the second stratum. This second layer could be hot-pressed together with one or more first layers, i.e. layers comprising the inorganic silicate compound. As a consequence of the second layer comprising a fibrous material, a cured resin and expanded thermoplastic particles, it becomes to a less degree suited to resist high temperatures, but obtains, on the other hand, excellent mechanical strength properties. According to a particularly preferred embodiment of the invention, the sheet may therefore, according to the invention, obtain the character of a combination comprising at least one layer which is resistant from a high-temperature point of view and which comprises the inorganic silicate compound, and at least one second layer which comprises the cured resin as well as the expanded thermoplastic particles. If the high temperatures that are to be resisted reach the sheet according to the invention from one side, the inventive sheet should, of course, be located such that the first layer, comprising the inorganic silicate compound, is directed towards the higher temperature, while the second layer, which comprises the cured resin, is turned away from the high-temperature source. In cases where high temperatures may be expected from two opposite sides, the inventive sheet is suitably designed such that it obtains first layers, which contain the inorganic silicate compound, on its peripheral sides, while, between these surface-located layers there might be two or more second layers which comprise the cured resin and the expanded thermoplastic particles.

However, it is pointed out that, according to the invention, it is not necessary that the sheet is produced through a simultaneous hot pressing of the first and second layers in a desired number. It would also be possible to separately produce a desired number of sheet elements, each of which being formed by one or more first layers containing the inorganic silicate compound, and a number of further sheet elements constituted by one or more second layers containing the cured resin and the thermoplastic particles. Thereafter, in a separate operation, a desired number of sheet elements of different properties are combined with each other in a suitable lamination operation. Thereby, the lamination may be performed by means of a gluing operation or by positioning at least one layer which fulfil the properties defined above with reference to either the first or the second layer between the sheet elements that are to be connected, and these intermediate layers should be in such a condition that the binders (silicates, resins) included therein not are fully cured, but have the ability of establishing a binding function between the sheet elements told of above during the lamination operation.

According to an alternative method for producing the inventive sheet, one or more first layers, i.e. layers containing the inorganic silicate compound, could be subjected to drying and heat supply in a press device or the like, such that a semi-manufacture could be obtained, said semi-manufacture being rigid to at least such a degree that it would maintain a sheet character. Upon the presence of thermoplastic particles in the first layer, the heat treatment should be executed until the thermoplastic particles expand. The semi-manufacture would, in such a case, obtain the character of a foam composite semi-manufacture. One or more such semi-manufactures could then be combined with each other, and possibly also with other sheet elements, for instance elements containing a curable resin, for a final pressing or other co-treatment to a sheet at an elevated temperature.

A sheet made of one or more first layers containing the inorganic silicate compound will, in the normal case, get a water resistance which is less good than the one obtained through the use of larger proportions of polymer materials. If a high water resistance is an important criteria, a sheet formed by one or more first layers containing the inorganic silicate compound may be combined with one or more second, relatively rigid layers comprising a cured resin as well as expanded thermoplastic particles. During the manufacture, in practice, a semi-manufacture of such a second layer could be positioned between two first layers containing the inorganic silicate compound. The semi-manufacture in the second layer would thereby contain the curable resin in an uncured state, and the expandable thermoplastic particles in an unexpanded state. During a hot pressing of these three layers, there is an intimate interconnection therebetween, and the first layers on the outside of the sheet will have a high fire resistance while, at the same time, the intermediate layer above all will have good mechanical strength properties.

In the following description, the terms A-, B-, and C-stage will be used as to the curable resin included in the possibly present second layer. The meaning hereof is that a curable resin present in an A-stage is meltable, scarcely cross-linked, and insoluble. A resin in the C-stage cannot be melted. The B-stage indicates a stage between the A- and C-stages.

Hereinafter, there is given a detailed description of compositions and manufacturing aspects as to the layer which is indicated "second" above. What is discussed below, is applicable both in the case where the second layer is manufactured individually, and only combined with one or more first layers for forming the sheet aimed at as a prefabricated unit, and the case in which a desired number of first and second layers are combined with each other in one and the same hot-pressing operation to form the sheet. What is told later as to the thermoplastic particles and the web-like material should also be regarded as applicable to thermoplastic particles that are possibly present in the first layer, and also to the fibrous and inorganic material which is included in the first layer.

Hereinafter, the term "composite material" will be used for "the second layer".

The composite material may, for instance, be produced in the following way: a pre-condensate of water based, curable resin is produced in a conventional way, and the water content is controlled such that there will be a dry content of 30 to 75 weight-%. The solution obtained in this way is provided with unexpanded thermoplastic particles, so-called micro-spheres, to such an extent that the weight ratio micro-spheres:resin in the pressed composite material varies between 4:1 and 1:50. It is advantageous to let the micro-spheres be present in such an amount that they, in an expanded state, present 50-95, preferably 75-95, volume-% of the web-like material and the resin mixture. The web-like material is impregnated with the mixture of resin and micro-spheres in a conventional way, for example by submerging the web in a bath containing the mixture or by spraying the mixture onto the web. The impregnation degree of the impregnated web may, for example, be controlled through a pressing with the aid of rolls.

The curable resins which come in question are represented by so-called formaldehyde-based resins with carbamide, phenol, resorcinol or melamine. However, also more generally curable resins may be used, such as poly-condensated resins, e.g. polyimide, and poly-added resins, for example polyurethane.

The web-like material may be represented by a woven or non-woven organic or inorganic material, and glass fibre, mineral fibre, cellulose fibre, and polyester fibre should be particularly mentioned. It is also important that the web-like material has a sufficient porosity in order to be able to get impregnated in a satisfying way by means of the mixture of resin and micro-spheres. In order to make the web-like material easy to dry and handle when regarded as an individual layer, said material suitably has a thickness varying between 0.1 and 5 mm. During the production of the sheet in the hot press, a plurality of such individual composite material layers may however be combined with each other and with possible "first" layers, and more precisely such that the thickness of the resulting sheet may be 40 mm or more. This has to do with the solvent content being controlled not to be hazardously high but, on the other hand, not so low that the pressing operation cannot take place in a steam environment which favours a homogenous pressing result. It is preferred that the solvent content in the composite material before the hot pressing is not more than 40, suitably not more than 25, and preferably not more than 15 weight-%. However, the solvent content should be sufficient for obtaining the favourable steam environment, preferably more than 2, and more preferably more than 5 weight-%.

The micro-spheres used for the production of the composite material has a shell which can be constituted by co-polymers of vinyl chloride, and vinylidene chloride, co-polymers of vinyl chloride and acrylonitrile, and co-polymers of styrene and acrylonitrile. Also co-polymers of nitrite methacrylate containing up to approximately 20 weight-% of styrene, co-polymers of methyl acrylate and up to approximately 50% weight-% of combined monomers of ethylmethacrylate, co-polymers of methylmethacrylate, and up to approximately 70 weight-% of ortho-chlorostyrene should be mentioned. The particle size of the unexpanded spheres, and accordingly of the expanded spheres may vary within a wide limit, and may be chosen in order to obtain the properties that are desired for the final product. As an example of particle sizes for unexpanded spheres, 1 µm to 1 mm, preferably 2 µm to 0.5 mm, and particularly 5 µm to 50 µm should be mentioned. During the expansion, the diameter of the micro-spheres increases by a factor of 2-5. The unexpanded spheres contain volatile, liquid expanding agents which are evaporated during the heat supply. These expanding agents may be constituted by freons, hydrocarbons, such as n-pentane, i-pentane, neo-pentane, butane, i-butane, or other expanding agents which are conventionally used in micro-spheres of the kind defined here. 5-30 weight-% of the micro-sphere may suitably be constituted by expanding agents. The micro-spheres can be supplied to the resin solution as dried particles or in a suspension, for example in water or an alcohol, such as methanol.

The resin/micro-sphere ratio in the impregnation solution may, as has been told earlier, vary within wide limits, and this ratio effects the properties of the final product. Inversely, with a certain application area and certain decided properties of the final product in view, a suitable resin/micro-sphere ratio in the mixture can be chosen. This ration can easily be determined with the aid of preparatory tests at a laboratory scale.

The mixture of resin and micro-spheres may, if desired or required, be provided with different additives, such as stabilisers, couplers, fillers, fire retarding additives and/or pigments.

Accordingly, in the composite material in the state of a semi-manufacture, the thermoplastic particles are present in an unexpanded state, and the curable resin is present in the A-, or possibly, B-stage. After drying to a solvent content of preferably 5-25 weight-%, the composite material may be arranged for the hot pressing to be executed in a later operation. Thereby, the composite material may, for instance, be wound up to form rolls for transportation or storage.

During the hot pressing, a porous material stratum may, if desired, be applied to one of or both sides of the web-like material impregnated with the resin mixture. Hereby, it is included that said porous material stratum could be located between two material webs impregnated with the resin mixture. The definition "porous" in connection to the material stratum should be understood as defining that the stratum should present such openings or cavities that it permits a partial intrusion of the resin mixture into the material stratum when the thermoplastic particles expand, and permits a solvent departure along/or through the material stratum. In practice, the material stratum may be constituted by any form of a fibrous stratum or fibrous web, e.g. a woven or non-woven organic or inorganic fibre material. Here, the term "fibrous web" includes so-called fibrous chips or chip carpets, for example made of glass or a mineral. As an example of fibre materials, glass fibre, mineral fibre, cellulose fibre, and polyester fibre should be mentioned. Hereby, particularly advantageous alternatives include making the porous stratum of glass wool or mineral wool.

Alternatively, the porous material stratum may also be constituted by a so-called expanded metal, viz. a cross-linked metal structure formed by one integral metal piece. In such an expanded metal, there are connecting bridges which are more or less oblique in relation to the main plane of the expanded metal stratum. Within such bridges, the expanded metal stratum has through-openings. Accordingly, the expanded metal stratum permits a solvent departure through the openings of the expanded metal stratum, and the solvent may also depart parallelly to the expanded metal stratum as a consequence of the openings and the cavities which are present in connection with the expanded metal stratum.

A further alternative to material strata is a foam stratum, for example made of melamine foam or polyester foam. Such a foam stratum may, during execution of the method, be positioned on one side of the impregnated web-like material during the hot pressing in order to accomplish the laminate aimed at. Such a foam stratum could also be positioned between strata formed by the impregnated web-like material during the hot pressing.

As foam plastic a foam plastic having a relatively soft character is preferably chosen. The density of the foam plastic may, for instance, be chosen to be approximately 200 kg/m³ or less. However, the density of the foam plastic should be chosen to be approximately 5 kg/m³ or more. Particularly favourable results have been obtained with foam plastics, the densities of which have been between 5 and 80 kg/m³.

When glass wool or mineral wool is used for the porous material stratum, the density is preferably chosen to be somewhere between 50 and 300 kg/m³, and is particularly preferred to be between 100 and 200 kg/m³.

The combination of the composite material constituted by the impregnated web-like material and said porous material stratum may be positioned in a device for hot pressing or the like, and there it is subjected to heat such that a remaining solvent content is evaporated, and such that thermoplastic particles expand.

The material stratum and the impregnated web-like material are suitably designed or chosen such that a partial intrusion of the resin mixture into the material stratum takes place when the thermoplastic particles expand. Thereby, there will be a superb interconnection between the resin mixture, the web-like material and the porous material stratum. As already mentioned, the material stratum is chosen to have such a porous character that remaining solvents can departure along and/or through the material stratum to a significant extent. By a normal press device construction, the solvent will mainly departure laterally through the part of the porous material stratum which is not occupied by intruded resin mixture.

Above, it has been described for an exemplifying purpose how it is possible to combine the composite material with further material strata, such as porous material strata, during the hot pressing thereof. However, it should be carefully noted that such porous material strata are not necessary, but that the hot pressing may take place with a plurality of composite material strata, each of which is constituted by an impregnated web-like material and possible further, non-porous strata. Such an embodiment is particularly favourably realised as a consequence of the solvent content in the composite material being controlled before the hot pressing, preferably by means of drying, to a value which is preferably within 5-25 weight-%.

The curing of the curable resin is performed in the hot-pressing device in one and the same stage as the evaporation of remaining solvents and the expansion of the thermoplastic particles, the time order suitable being such that the solvent evaporation and the expansion of the thermoplastic particles take place approximately simultaneously while the final curing of the curable resin takes place subsequently thereto, by the temperature rise which appears when the main part of the solvent volume has departed.

The composite material, constituted by the impregnated web-like material and possible further material strata, is suitably positioned in the hot-pressing device, which is then closed to a certain gap width. The subsequent expansion of the thermoplastic particles gives rise to such a volume increase that there is a pressing function between the press surfaces without any need of moving the press surfaces closer to each other.

The temperature in the heating device, the hot-pressing device or the like during the treatment of the composite material may vary between 100 and 200°C, preferably 120-160°C. At tests, good results have been obtained at approximately 140°C.

As already mentioned, one task of the porous material stratum, when present, is to act such that the solvent can depart along and/or through the material stratum. Moreover, the porous material stratum may also have further functions. More precisely, it may simply act as a stratum for accomplishing a distance in different sandwich-like composite materials, and so independently of if there are layers made of the impregnated web-like material on both sides or only one side thereof. The porous material stratum may also have the character of a cost-reducing filler.

In a possible embodiment according to the invention, in which impregnated material webs are positioned at opposite sides of a porous material stratum, the porous material stratum, the impregnated web-like material, and the heat and pressing conditions are chosen such that the curable resin and/or the thermoplastic form/forms connecting bridges through the porous material layer. By such an embodiment the connecting bridges are however not allowed to become so extensive that they prevent solvent degassing along and/or through the material stratum. Such connecting bridges between the layers made of the impregnated web-like material located at opposite sides of the porous material stratum result in a more stable interconnection between said layers than would be provided for by the porous material stratum on its own. Hereby, improved mechanical strength properties are obtained, for example as to the rigidity of the obtained composite material, but above all, as to the resistance against splittering of the composite along the porous material stratum. Particularly, by porous material strata which are highly compressible in themselves, the connecting bridges result in a larger resistance against compaction of the porous material stratum. The connecting bridges are particularly favourable in such cases where the porous material stratum is constituted by foam plastic or some other material which is relatively soft or has a low density, but where good strength properties are desired despite such softness or low density.

As has been told above, the second layer, named "composite material" in the previous description may be laminated to one or more first layers containing the inorganic silicate compound by means of lamination techniques known per se. Furthermore, there is the possibility already told of pressing together one or more first layers comprising the inorganic silicate compound and one or more second layers (composite material layers), in one and the same hot pressing operation in order to obtain the sheet aimed at, and on at least one side of the sheet, there should be located one or more first layers containing the inorganic silicate compound.

It is pointed out, that in practice, the individual first and second layers, in their connected state, have a thickness which is in the order of 1 mm. This counts for the case in which there are thermoplastic expanded particles included in the layer as well as when such particles are missing. In the latter case, the inorganic filler particles will thus have a density reducing function. Further, it might be mentioned as an example, that such a first or second layer may have a density which is in the order or 210 kg/m³ when being in its connected state. When the final sheet is produced, this one might, depending on the thickness, present a larger or smaller number of first and/or second layers, meaning that there might be several dozens of layers regularly occurring.

Of course, the invention can be subjected to a plurality of modifications within the scope of the inventive idea, such as the latter is defined in the following patent claims.

## Claims

1. A high-temperature resistant sheet comprising at least one foam-like layer which comprises at least one inorganic silicate compound, a fibrous inorganic material and at least one low-density filler, which filler comprises expanded thermoplastic particles, **characterised in that** the low-density filler comprises a mixture of expanded thermoplastic particles and inorganic particles in order to improve the sheet's resistance against high temperatures.

2. A sheet according to claim 1, **characterised in that** the inorganic particles are constituted by glass.

3. A sheet according to claim 2, **characterised in that** the glass particles are constituted by glass balloons.

4. A sheet according to any preceding claim, **characterised in that** the expanded thermoplastic particles are constituted by micro-spheres.

5. A sheet according to any preceding claim, **characterised in that** the fibrous inorganic material, as seen in its initial state, is web-like.

6. A sheet according to any preceding claim, **characterised in that** the silicate compound is constituted by water-glass.

7. A sheet according to any preceding claim, **characterised in that** the silicate compound with the additives included therein constitutes 25-90, suitably 45-70, preferably approximately 65 weight-% of the weight of the first layer.

8. A sheet according to any preceding claim, **characterised in that** the fibrous inorganic material constitutes 10-60, suitably 15-45, preferably 25 weight-% of the first layer.

9. A sheet according to any one of claims 2-8, **characterised in that** the filler constitutes 3-60, suitably 5-40, preferably approximately 10 weight-% of the first layer.

10. A sheet according to any preceding claim, **characterised in that** the first layer comprises a first stratum which contains the inorganic silicate compound, and a second stratum which contains a porous material for permitting a gas departure along and/or through said porous material stratum during a production of the sheet through hot pressing.

11. A sheet according to any preceding claim; **characterised in that**, in addition to the first layer and in a number of one or more, it also comprises at least one second layer.

12. A sheet according to claim 11, **characterised in that** the second layer comprises a fibrous material, a cured resin, and expanded thermoplastic particles.

13. A sheet according to claim 12, **characterised in that** the fibrous material of the second layer, as seen in its initial state, is web-like.

14. A sheet according to claim 12 or 13, **characterised in that** the fibrous material of the second layer is constituted by a woven or non-woven organic or inorganic fibre material.

15. A sheet according to any preceding claim, **characterised in that** it comprises at least 30, suitably at least 40, preferably at least 50, and particularly at least 85 weight-% inorganic constituents.

16. A method for producing a sheet, in which at least one layer containing a binder and a solvent is treated for solvent removal and for obtaining a binding effect in the sheet, the layer treated being at least partly formed of at least one inorganic silicate compound which constitutes the binder and a fibrous inorganic material, and the layer subjected to the treatment also being provided to comprise at least one low-density filler which comprises expanded thermoplastic particles in le order to give the layer a foam-like character, or unexpanded thermoplastic particles which have been/are induced to expand through heat supply, **characterised in that** the low-density filler is provided to comprise a mixture of the expanded thermoplastic particles and inorganic particles in order to improve the sheet's resistance against high temperatures.

17. A method according to claim 16, **characterised in that** the glass particles are chosen as the inorganic particles.

18. A method according to claim 17, **characterised in that** glass balloons are chosen as the glass particles.

19. A method according to claim 16, **characterised in that** the unexpanded thermoplastic particles of the low-density filler are induced to expand through heat supply.

20. A method according to any one of claims 16-19, **characterised in that** the treatment, including the heat supply, is obtained by means of hot pressing.

21. A method according to any one of claims 16-20, **characterised in that** the layer is provided with a first stratum which comprises the inorganic compound, and a second stratum which comprises a porous material for permitting a departure of solvent along and/or through said second porous material stratum during the treatment.

22. A method according to any one of claims 16-21, **characterised in that** the treatment for producing the sheet is executed with at least one second layer, in addition to the at least one first layer, said second layer comprising a fibrous material impregnated with a curable resin and comprising thermoplastic particles.

23. A method according to claim 22, **characterised in that**, before the treatment, the thermoplastic particles are present in the second layer in an unexpanded state, and that the particles are induced to expand through a heat supply during the treatment.

24. A method according to claim 23, **characterised in that**, during the treatment, the curable resin is induced to change from an A-, or a B-stage to a C-stage.

25. A method according to claim 22, **characterised in that**, before the treatment, the second layer has the character of a prefabricated foam composite material layer in which the thermoplastic particles are present in an expanded state.

26. A method according to claim 25, **characterised in that** the curable resin is present in the foam composite material layer in an A- or a B-stage.

27. A method according to any one of claims 16-26, **characterised in that**, after the treatment, the sheet is laminated with one or more further prefabricated layers constituted by a fibrous material, a cured resin, and expanded thermoplastic particles.

28. A method according to any one of claims 16-27, **characterised in that** a plurality of first layers are laminated in order to produce a sheet.

29. A method according to claim 28, **characterised in that** at least a number of the first layers comprise thermoplastic particles which, before the lamination, are present in an unexpanded state.

30. A method according to claim 28, **characterised in that** at least a number of the first layers contain thermoplastic particles which, before the lamination, exist in an expanded state.

## Patentansprüche

1. Eine gegen hohe Temperaturen beständige Scheibe, die mindestens eine schaumähnliche Schicht mit mindestens einer anorganischen Silicatverbindung umfasst, ein faserartiges anorganisches Material und mindestens einen Füllstoff mit geringer Dichte, wobei der Füllstoff expandierte thermoplastische Partikel umfasst, **dadurch gekennzeichnet, dass** der Füllstoff geringer Dichte eine Mischung expandierter thermoplastischer Partikel und anorganischer Partikel umfasst, um die Resistenz der Scheibe gegen hohe Temperaturen zu erhöhen.

2. Scheibe nach Anspruch 1, **dadurch gekennzeichnet, dass** die anorganischen Partikel aus Glas bestehen.

3. Scheibe nach Anspruch 2, **dadurch gekennzeichnet, dass** die Glaspartikel aus Glasballons bestehen.

4. Scheibe nach einem der vorangehenden Ansprüche, **dadurch gekennzeichnet, dass** die expandierten thermoplastischen Partikel aus Mikro-Sphären bestehen.

5. Scheibe nach einem der vorangehenden Ansprüche, **dadurch gekennzeichnet, dass** das faserartige anorganische Material, in seinem Ausgangszustand betrachtet, bahnförmig ist.

6. Scheibe nach einem der vorangehenden Ansprüche, **dadurch gekennzeichnet, dass** die Silicatverbindung aus Wasserglas besteht.

7. Scheibe nach einem der vorangehenden Ansprüche, **dadurch gekennzeichnet, dass** die Silicatverbindung mit den darin enthaltenen Zusätzen 25-90, zweckmäßigerweise 45-70, vorzugsweise etwa 65 Gew.-% des Gewichts der ersten Schicht ausmacht.

8. Scheibe nach einem der vorangehenden Ansprüche, **dadurch gekennzeichnet, dass** das faserartige anorganische Material 10-60, zweckmäßigerweise 15-45, vorzugsweise 25 Gew.-% der ersten Schicht ausmacht.

9. Scheibe nach einem der Ansprüche 2-8, **dadurch gekennzeichnet, dass** der Füllstoff 3-60, zweckmäßigerweise 5-40, vorzugsweise etwa 10 Gew.-% der ersten Schicht ausmacht.

10. Scheibe nach einem der vorangehenden Ansprüche, **dadurch gekennzeichnet, dass** die erste Schicht eine erste Lage umfasst, die die anorganische Silicatverbindung enthält, sowie eine zweite Lage, die ein poröses Material enthält, das ein Entweichen des Gases entlang und/oder durch diese Lage aus porösem Material während der Herstellung der Scheibe durch Heißpressen ermöglicht.

11. Scheibe nach einem der vorangehenden Ansprüche, **dadurch gekennzeichnet, dass** sie zusätzlich zur ersten Schicht und in einer Anzahl von einer oder mehr noch mindestens eine zweite Schicht umfasst.

12. Scheibe nach Anspruch 11, **dadurch gekennzeichnet, dass** die zweite Schicht ein faserartiges Material, ein gehärtetes Harz und expandierte thermoplastische Partikel umfasst.

13. Scheibe nach Anspruch 12, **dadurch gekennzeichnet, dass** das faserartige Material der zweiten Schicht, in seinem Ausgangszustand betrachtet, bahnförmig ist.

14. Scheibe nach Anspruch 12 oder 13, **dadurch gekennzeichnet, dass** das faserartige Material der zweiten Schicht aus einem gewebten oder ungewebten organischen oder anorganischen Fasermaterial besteht.

15. Scheibe nach einem der vorangehenden Ansprüche, **dadurch gekennzeichnet, dass** sie mindestens 30, zweckmäßigerweise mindestens 40, vorzugsweise mindestens 50 und insbesondere mindestens 85 Gew.-% anorganische Bestandteile enthält.

16. Verfahren zur Herstellung einer Scheibe, bei dem mindestens eine Schicht, die ein Bindemittel und ein Lösungsmittel enthält, zur Entfernung des Lösungsmittels und zum Erhalt einer bindenden Wirkung in der Scheibe behandelt wird, wobei die behandelte Schicht zumindest teilweise aus einer anorganischen Silicatverbindung, die das Bindemittel darstellt, und einem faserartigen anorganischen Material besteht und wobei die der Behandlung unterzogene Schicht so ausgestaltet ist, dass sie mindestens einen Füllstoff geringer Dichte umfasst, der expandierte thermoplastische Partikel umfasst, um der Schicht schaumähnliche Eigenschaften zu geben, oder nicht expandierte thermoplastische Partikel, die dazu gebracht wurden/werden, unter Hitzezufuhr zu expandieren, **dadurch gekennzeichnet, dass** der Füllstoff geringer Dichte so ausgestaltet ist, dass er eine Mischung der expandierten thermoplastischen Partikel und anorganischen Partikel umfasst, um die Beständigkeit der Scheibe gegen hohe Temperaturen zu verbessern.

17. Verfahren nach Anspruch 16, **dadurch gekennzeichnet, dass** die Glaspartikel als anorganische Partikel gewählt werden.

18. Verfahren nach Anspruch 17, **dadurch gekennzeichnet, dass** Glasballons als Glaspartikel gewählt werden.

19. Verfahren nach Anspruch 16, **dadurch gekennzeichnet, dass** die nicht expandierten thermoplastischen Partikel des Füllstoffs geringer Dichte dazu gebracht werden, durch Hitzezufuhr zu expandieren.

20. Verfahren nach einem der Ansprüche 16-19, **dadurch gekennzeichnet, dass** die Behandlung, einschließlich der Hitzezufuhr, durch Heißpressen geschieht.

21. Verfahren nach einem der Ansprüche 16-20, **dadurch gekennzeichnet, dass** die Schicht mit einer ersten Lage versehen ist, die die anorganische Zusammensetzung enthält, sowie einer zweiten Lage, die ein poröses Material umfasst, um während der Behandlung ein Entweichen des Lösungsmittels entlang und/oder durch diese zweite Lage porösen Materials zu ermöglichen.

22. Verfahren nach einem der Ansprüche 16-21, **dadurch gekennzeichnet, dass** die Behandlung zur Herstellung der Scheibe mit mindestens einer zweiten Schicht, zusätzlich zu der mindestens einen ersten Schicht, ausgeführt wird, wobei diese zweite Schicht ein faserartiges Material umfasst, das mit einem härtbaren Harz imprägniert ist und thermoplastische Partikel enthält.

23. Verfahren nach Anspruch 22, **dadurch gekennzeichnet, dass** die thermoplastischen Partikel vor der Behandlung in nicht expandiertem Zustand in der zweiten Schicht vorhanden sind und dass die Partikel dazu gebracht werden, durch eine Hitzezufuhr während der Behandlung zu expandieren.

24. Verfahren nach Anspruch 23, **dadurch gekennzeichnet, dass** das härtbare Harz während der Behandlung induziert wird, um von einem A- oder B-Zustand in einen C-Zustand überzugehen.

25. Verfahren nach Anspruch 22, **dadurch gekennzeichnet, dass** die zweite Schicht vor der Behandlung die Eigenschaften einer vorgefertigten Schaum-/Verbundstoff-Schicht hat, in der die thermoplastischen Partikel in expandiertem Zustand vorliegen.

26. Verfahren nach Anspruch 25, **dadurch gekennzeichnet, dass** das härtbare Harz in der Schaum-/Verbundstoff-Schicht in einem A- oder B-Zustand vorliegt.

27. Verfahren nach einem der Ansprüche 16-26, **dadurch gekennzeichnet, dass** die Scheibe nach der Behandlung mit einer oder mehreren weiteren vorgefertigten Schichten laminiert wird, die aus einem faserartigen Material, einem gehärteten Harz und expandierten thermoplastischen Partikeln bestehen.

28. Verfahren nach einem der Ansprüche 16-27, **dadurch gekennzeichnet, dass** eine Vielzahl von ersten Schichten laminiert werden, um eine Scheibe herzustellen.

29. Verfahren nach Anspruch 28, **dadurch gekennzeichnet, dass** zumindest einige der ersten Schichten thermoplastische Partikel umfassen, die vor dem Laminieren in nicht expandiertem Zustand vorliegen.

30. Verfahren nach Anspruch 28, **dadurch gekennzeichnet, dass** zumindest einige der ersten Schichten thermoplastische Partikel umfassen, die vor dem Laminieren in expandiertem Zustand vorliegen.

## Revendications

1. Feuille résistant à des températures élevées, comprenant au moins une couche du type mousse qui comprend au moins un composé de silicate inorganique, une matière inorganique fibreuse, et au moins une charge à faible densité, laquelle charge comprend des particules thermoplastiques expansées,
**caractérisée en ce que** la charge à faible densité comprend un mélange de particules inorganiques et de particules thermoplastiques expansées de façon à améliorer la résistance de la feuille vis-à-vis de températures élevées.

2. Feuille selon la revendication 1,
**caractérisée en ce que** les particules inorganiques sont constituées par du verre.

3. Feuille selon la revendication 2,
**caractérisée en ce que** les particules de verre sont constituées par des billes de verre.

4. Feuille selon une quelconque revendication précédente,
**caractérisée en ce que** les particules thermoplastiques expansées sont constituées par des microsphères.

5. Feuille selon une quelconque revendication précédente,
**caractérisée en ce que** la matière inorganique fibreuse, dans son état initial, est analogue à un ruban.

6. Feuille selon une quelconque revendication précédente,
**caractérisée en ce que** le composé de silicate est constitué de verre soluble.

7. Feuille selon une quelconque revendication précédente,
**caractérisée en ce que** le composé de silicate avec les additifs inclus dans celui-ci constitue 25 - 90, de façon appropriée 45 - 70, de préférence approximativement 65% en poids du poids de la première couche.

8. Feuille selon une quelconque revendication précédente,
**caractérisée en ce que** la matière inorganique fibreuse constitue 10 - 60, de façon appropriée 15 - 45, de préférence 25% en poids de la première couche.

9. Feuille selon une quelconque des revendications 2 - 8,
**caractérisée en ce que** la charge constitué 3 - 60, de façon appropriée 5 - 40, de préférence approximativement 10% en poids de la première couche.

10. Feuille selon une quelconque revendication précédente,
**caractérisée en ce que** la première couche comprend une première strate qui contient le composé de silicate inorganique, et une seconde strate qui contient une matière poreuse pour permettre l'évacuation du gaz le long et/ou à travers ladite strate de matière poreuse pendant la production de la feuille par pressage à chaud.

11. Feuille selon une quelconque revendication précédente,
**caractérisée en ce que**, en plus de la première couche et en un nombre de une ou plus, elle comprend également au moins une seconde couche.

12. Feuille selon la revendication 11,
**caractérisée en ce que** la seconde couche comprend une matière fibreuse, une résine durcie, et des particules thermoplastiques expansées.

13. Feuille selon la revendication 12,
**caractérisée en ce que** la matière fibreuse de la seconde couche, dans son état initial, est analogue à un ruban.

14. Feuille selon la revendication 12 ou 13,
**caractérisée en ce que** la matière fibreuse de la seconde couche est constituée par une matière fibreuse inorganique ou organique tissée ou non tissée.

15. Feuille selon une quelconque revendication précédente,
**caractérisée en ce qu'**elle comprend au moins 30, de façon appropriée au moins 40, de préférence au moins 50, et, particulièrement, au moins 85% en poids de constituants inorganiques.

16. Procédé pour produire une feuille, dans lequel au moins une couche contenant un liant et un solvant est traitée pour l'élimination du solvant et pour obtenir un effet de liaison dans la feuille, la couche traitée étant au moins partiellement formée d'au moins un composé de silicate inorganique qui constitue le liant et d'une matière inorganique fibreuse, et la couche soumise au traitement étant également prévue pour comprendre au moins une charge à faible densité qui comprend des particules thermoplastiques expansées de façon à fournir à la couche un caractère du type mousse, ou des particules thermoplastiques non expansées qui ont été ou sont induites à s'expanser par amenée de chaleur,
**caractérisé en ce que** la charge à faible densité est prévue pour comprendre un mélange des particules thermoplastiques expansées et des particules inorganiques de façon à améliorer la résistance de la feuille vis-à-vis de températures élevées.

17. Procédé selon la revendication 16,
**caractérisé en ce que** des particules de verre sont choisies comme les particules inorganiques.

18. Procédé selon la revendication 17,
**caractérisé en ce que** des billes de verre sont choisies comme les particules de verre.

19. Procédé selon la revendication 16,
**caractérisé en ce que** les particules thermoplastiques non expansées de la charge à faible densité sont induites à s'expanser par amenée de chaleur.

20. Procédé selon une quelconque des revendications 16 - 19,
**caractérisé en ce que** le traitement, incluant l'amenée de chaleur, est obtenu au moyen d'un pressage à chaud.

21. Procédé selon une quelconque des revendications 16 - 20,
**caractérisé en ce que** la couche est munie d'une première strate qui comprend le composé inorganique et d'une seconde strate qui comprend une matière poreuse pour permettre l'évacuation du solvant le long et/ou à travers ladite seconde strate de matière poreuse pendant le traitement.

22. Procédé selon une quelconque des revendications 16 - 21,
**caractérisé en ce que** le traitement pour produire la feuille est exécuté avec au moins une seconde couche, en plus de la première couche, ladite seconde couche comprenant une matière fibreuse imprégnée d'une résine durcissable et comprenant des particules thermoplastiques.

23. Procédé selon la revendication 22,
**caractérisé en ce que**, avant le traitement, les particules thermoplastiques sont présentes dans la seconde couche dans un état non expansé, et **en ce que** les particules sont induites à s'expanser par une amenée de chaleur pendant le traitement.

24. Procédé selon la revendication 23,
**caractérisé en ce que**, pendant le traitement, la résine durcissable est induite à changer d'un stade A ou d'un stade B à un stade C.

25. Procédé selon la revendication 22,
**caractérisé en ce que**, avant le traitement, la seconde couche présente le caractère d'une couche de matière composite de mousse préfabriquée, dans laquelle les particules thermoplastiques sont présentes dans un état expansé.

26. Procédé selon la revendication 25,
**caractérisé en ce que** la résine durcissable est présente dans la couche de matière composite de mousse dans un stade A ou un stade B.

27. Procédé selon une quelconque des revendications 16 - 26,
**caractérisé en ce que**, après le traitement, la feuille est lamifiée avec une ou plusieurs autres couches préfabriquées constituées par une matière fibreuse, une résine durcie, et des particules thermoplastiques expansées.

28. Procédé selon une quelconque des revendications 16 - 27,
**caractérisé en ce qu'**une pluralité de premières couches sont lamifiées de façon à produire une feuille.

29. Procédé selon la revendication 28,
**caractérisé en ce qu'**au moins un certain nombre des premières couches comprennent des particules thermoplastiques qui, avant la stratification, sont présentes dans un état non expansé.

30. Procédé selon la revendication 28,
**caractérisé en ce qu'**au moins un certain nombre des premières couches contiennent des particules thermoplastiques qui, avant la stratification, existent dans un état expansé.
